# EUROPÄISCHE PATENTSCHRIFT

(11) **EP 1 499 819 B1**
(45) Veröffentlichungstag und Bekanntmachung des Hinweises auf die Patenterteilung: **15.11.2006**
(21) Anmeldenummer: 03746229.8
(22) Anmeldetag: 10.04.2003
(51) Int. Cl.: F16H 61/28, F16H 61/32

(54) **GETRIEBEAKTORIK UND VERFAHREN ZUM ABGLEICHEN EINER GETRIEBEAKTORIK**
GEARBOX ACTUATION SYSTEM AND METHOD FOR ADJUSTING A GEARBOX ACTUATION SYSTEM
SYSTEME D'ACTIONNEMENT DE TRANSMISSION ET PROCEDE DE REGLAGE D'UN SYSTEME D'ACTIONNEMENT DE TRANSMISSION

(30) Priorität: 10.04.2002 DE 10215715; 05.09.2002 DE 10241068
(43) Veröffentlichungstag der Anmeldung: 26.01.2005
(73) Patentinhaber: LuK Lamellen und Kupplungsbau Beteiligungs KG, 77815 Bühl (DE)
(72) Erfinder: KÜPPER, Klaus, 77815 Bühl (DE); HENNEBERGER, Klaus, 77815 Bühl (DE); METZGER, Jörg, 77830 Bühlertal (DE); BERGER, Reinhard, 77815 Bühl (DE); STENGEL, Frank, 77815 Bühl-Neusatz (DE)
(86) Internationale Anmeldenummer: PCT/DE2003/001183
(87) Internationale Veröffentlichungsnummer: WO 2003/087630

(56) Entgegenhaltungen:
- EP-A- 0 599 511
- WO-A-98/54491
- DE-A- 10 025 907
- DE-A- 10 027 332

## Beschreibung

Die vorliegende Erfindung betrifft eine Getriebeaktorik und ein Verfahren zum Abgleichen einer Getriebeaktorik eines automatisierten Getriebes eines Fahrzeuges.

Automatisierte Schaltgetriebe, wie z. B. XSG-Getriebesysteme (ASG, PSG etc), werden immer häufiger in Fahrzeuge eingebaut. Die Getriebeaktorik derartiger Getriebe kann regelmäßig oder unregelmäßig etwa im Fehlerfall oder im vermuteten Fehlerfall gegen bestimmte Referenzpunkte gefahren werden. Dieses Anfahren der Referenzpunkte dient zum Abgleichen bzw. Referenzieren der Sensorik, insbesondere der inkrementellen Wegsensorik. Weiterhin kann dieses Anfahren der Referenzpunkte "tastend" erfolgen. Diese Vorgehensweise wird bevorzugt dann angewendet, wenn die exakte Position der Aktorik innerhalb des zur Verfügung stehenden Bewegungsraumes, i.d.R. das H-Schaltbild eines mechanischen Schaltgetriebes, nicht bekannt ist. Die Referenzpunkte werden innerhalb der Neutralgasse angefahren, sodass es erforderlich ist, dass kein Gang eingelegt ist.

In der DE 100 25 907 A1 wird eine Getriebevorrichtung mit einer Schalteinrichtung zu deren Ansteuerung, eine Steuerungsvorrichtung zur Steuerung einer Getriebevorrichtung mit einer Schalteinrichtung sowie ein Verfahren zur Steuerung einer derartigen Getriebevorrichtung offenbart. Dabei wird ein Positionsabgleich bzw. eine Adaption der Position eines Schaltfingers vorgenommen. Dadurch kann die Wahrscheinlichkeit von Fehlschaltungen, Getriebebeschädigungen, Funktionsstörungen und Ausfällen reduziert werden.

Der Erfindung liegt die Aufgabe zugrunde, eine Getriebeaktorik und ein Verfahren zum Abgleichen einer Getriebeaktorik eines automatisierten Getriebes eines Fahrzeuges vorzuschlagen, sodass ein Auslegen des aktuell eingelegten Ganges zum Durchführen eines Abgleichs der Getriebeaktorik nicht erforderlich ist.

Diese Aufgabe wird verfahrensmäßig durch ein Verfahren zum Ausgleichen der Getriebeaktorik eines automatisierten Getriebes eines Fahrzeuges gelöst, bei dem zumindest eine Referenzfahrt bei eingelegtem Gang durchgeführt wird.

Erfindungsgemäß kann vorgesehen sein, dass die Getriebeaktorik derart ausgeführt wird, dass ein Referenzpunkt in der Neutralgasse angefahren wird, ohne die jeweiligen Schaltgabeln und Schaltschienen mitzubewegen. Somit wird bei der Referenzfahrt in der Neutralgasse nicht notwendigerweise die Schaltgabel mitbewegt, sodass der aktuelle Gang nicht ausgelegt werden muss.

Der wesentliche Vorteil der Erfindung besteht darin, dass bei eingelegtem Gang, damit also für den Fahrer unmerklich, eine Referenzierung bzw. ein Abgleich der Getriebeaktorik bzw. deren Meßsysteme erfolgen kann.

Im Rahmen einer Weiterbildung der Erfindung können die Schaltschienen mit ihren Schaltmäulern eine Gasse bilden, in der sich der Schaltfinger bewegen kann, unabhängig davon, ob ein Gang geschaltet ist. Wird aus dieser Situation nun eine Referenzfahrt angestoßen, kann der Schaltfinger sich seitlich in Richtung N-Gasse bewegen und dabei gleichzeitig periodisch nach oben und unten tasten, bis ein Widerstand spürbar ist. Falls dieser Widerstand wegfällt, kann der Schaltfinger sich also in diesem Fall nach oben über die gesamte Neutralgassenbreite bewegen, beispielsweise zu einem gegenüberliegenden Referenzpunkt.

Auf diese Weise kann bereits ein Abgleich in Wählrichtung erfolgen. Der abschließende Abgleich in Schaltrichtung kann z.B. gemäß einer nächsten Ausgestaltung der Erfindung in einer extra dafür vorgesehenen Aussparung oder dergleichen durchgeführt werden.

Eine Weiterbildung der Erfindung kann vorsehen, dass der Schaltfinger nach der Referenzierung wieder in seine Position vor der Referenzfahrt zurückkehrt. Geeignete Logiken sollten bei einem unbekannten Startpunkt festgelegt werden, um zu bestimmen, in welche Schaltrichtung die initiale Bewegung erfolgen soll.

Eine weitere Ausgestaltung der vorliegenden Erfindung kann vorschlagen, dass die genannte Tastroutine in Kombination mit den genannten Schaltmaulgeometrien regelmäßig oder unregelmäßig durchgeführt wird.

Das erfindungsgemäß vorgeschlagene Verfahren kann insbesondere bei automatisierten Schaltgetrieben und bei Parallelschaltgetrieben mit der sogenannten Activ-Interlock-Aktorik zum Einsatz kommen.

Des weiteren wird die der Erfindung zugrundeliegende Aufgabe durch eine erfindungsgemäße Getriebeaktorik, insbesondere zum Durchführen des vorgeschlagenen Verfahrens, gelöst, bei der zum Abgleichen zumindest eine Referenzfahrt vorgesehen ist.

Gemäß einer Ausgestaltung der Erfindung können die Schaltmäuler an den Schaltschienen derart ausgebildet sein, dass die Neutralgasse bei der Referenzfahrt von dem Schaltfinger erreicht wird, ohne dass der aktuelle Gang ausgelegt wird.

Vorzugsweise bilden die Schaltmäuler der parallel zueinander angeordneten Schaltschienen eine Gasse, in der der Schaltfinger während der Referenzfahrt, unabhängig davon, ob ein Gang eingelegt ist, bewegt werden kann.

Gemäß einer Weiterbildung der Erfindung kann die vorgesehene Gasse zum Abgleichen in Wählrichtung vorgesehen sein. Zum Abgleichen in Schaltrichtung kann zumindest eine Aussparung berücksichtigt werden.

Eine Rastierung der einzelnen Schaltschienen ist hilfreich oder notwendig, um den zuletzt eingelegten Gang auch dann eingespurt zu halten, wenn der Schaltfinger nicht für eine Arretierung der Schaltschiene sorgt.

Vorzugsweise können bei der erfindungsgemäßen Getriebeaktorik z. B. als Wähl- und/oder Schaltmotor jeweils ein bürstenloser Elektromotor oder dergleichen vorgesehen sein.

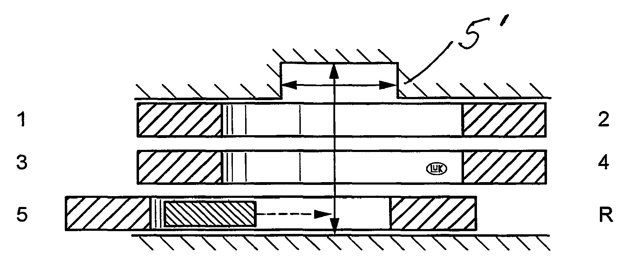

Weitere Vorteile und vorteilhafte Ausgestaltungen ergeben sich aus den Unteransprüchen und der einzigen Figur der Erfindung.

In der einzigen Figur sind schematisch drei Schaltschienen 1, 2, 3 mit ihren jeweiligen Schaltmäulern dargestellt. Durch die Schaltmäuler der Schaltschienen 1, 2, 3 wird eine Gasse 4 gebildet, in der der nicht weiter dargestellte Schaltfinger bewegt werden kann, unabhängig davon, ob ein Gang geschaltet ist oder nicht. Die den jeweiligen Schaltschienen 1, 2, 3 zugeordneten Gänge sind jeweils in der Figur angedeutet.

Wenn eine Referenzfahrt angestoßen wird, kann der Schaltfinger sich seitlich in Richtung N-Gasse bewegen und dabei gleichzeitig periodisch nach oben und unten tasten, bis ein Widerstand spürbar ist. Diese Bewegungen sind durch Pfeile in der Figur angedeutet. Falls dieser Widerstand wegfällt, kann der Schaltfinger nach oben über die gesamte Neutralgassenbreite bewegt und gegebenenfalls ein gegenüberliegender Referenzpunkt erreicht werden. Somit kann ein Abgleich in Wählrichtung erfolgen. Der abschließende Abgleich in Schaltrichtung kann z.B. in einer extra dafür vorgesehenen Aussparung 5' durchgeführt werden. Nach der Referenzierung fährt der Schaltfinger wieder in seine Position vor der Referenzfahrt zurück.

## Patentansprüche

1. Verfahren zum Abgleichen einer Getriebeaktorik eines automatisierten Getriebes eines Fahrzeuges mit für einen Schaltfinger Schaltgassen und eine Wählgasse bildenden Schaltmäulern, wobei mittels einer Referenzfahrt des Schaltfingers Referenzpunkte angefahren werden, **dadurch gekennzeichnet, dass** durch den Schaltfinger zumindest eine Referenzfahrt entlang der Gassen bei eingelegtem Gang durchgeführt wird.

2. Verfahren nach Anspruch 1, **dadurch gekennzeichnet, dass** die Getriebeaktorik derart ausgeführt wird, dass ein Referenzpunkt in einer Wählgasse angefahren wird, ohne die jeweiligen Schaltgabeln und Schaltschienen mitzubewegen.

3. Verfahren nach Anspruch 2, **dadurch gekennzeichnet, dass** der Schaltfinger seitlich in Richtung Wählgasse bewegt wird und gleichzeitig periodisch nach oben und unten die Referenzpunkte abgefahren werden.

4. Verfahren nach einem der vorangehenden Ansprüche, **dadurch gekennzeichnet, dass** ein Abgleichen in Wählrichtung durchgeführt wird, wenn der Schaltfinger über die gesamte Wählgassenbreite hinweg bewegt wird.

5. Verfahren nach einem der vorangehenden Ansprüche, **dadurch gekennzeichnet, dass** ein Abgleichen in Richtung einer Schaltgasse mittels einer vorgesehenen Aussparung parallel zu den Schaltschienen durchgeführt wird.

6. Verfahren nach einem der vorangehenden Ansprüche, **dadurch gekennzeichnet, dass** der Schaltfinger nach der Referenzierung wieder in seine Ausgangsposition vor der Referenzfahrt zurück bewegt wird.

7. Verfahren nach einem der vorangehenden Ansprüche, **dadurch gekennzeichnet, dass** eine Referenzfahrt zum Anfahren der Referenzpunkte regelmäßig oder unregelmäßig durchgeführt wird.

8. Getriebeaktorik zum Wählen und Schalten von Gängen bei einem automatisierten Getriebe eines Fahrzeuges zum Durchführen des Verfahrens nach einem der Ansprüche 1 bis 7, mit einem Schaltmäuler betätigenden Schaltfinger,
**dadurch gekennzeichnet, dass**
zum Abgleichen zumindest eine Referenzfahrt vorgesehen ist und die Wählgasse derart ausgelegt ist, dass die Referenzfahrt erreichbar ist, ohne dass der aktuelle Gang ausgelegt ist.

9. Getriebeaktorik nach Anspruch 8, **dadurch gekennzeichnet, dass** die Schaltmäuler der parallel zueinander angeordneten Schaltschienen eine Gasse bilden, in der der Schaltfinger während der Referenzfahrt, unabhängig davon, ob ein Gang eingelegt ist, bewegbar ist.

10. Getriebeaktorik nach Anspruch 9, **dadurch gekennzeichnet, dass** die vorgesehene Gasse zum Abgleichen in Wählrichtung vorgesehen ist.

11. Getriebeaktorik nach einem der Ansprüche 8 bis 10, **dadurch gekennzeichnet, dass** zum Abgleichen in Schaltrichtung zumindest eine Aussparung vorgesehen ist.

12. Getriebeaktorik nach einem der Ansprüche 8 bis 11, **dadurch gekennzeichnet, dass** jede Schaltschiene eine Rastierung aufweist, um den zuletzt eingelegten Gang im eingespurten Zustand zu halten.

13. Getriebeaktorik nach einem der Ansprüche 8 bis 12, **dadurch gekennzeichnet, dass** zumindest ein bürstenloser Elektromotor zum Wählen und/oder Schalten vorgesehen ist.

## Claims

1. Method for calibrating a transmission actuating system of an automated transmission of a vehicle, with shift jaws that form shift tracks and a selection track for a selector lever, wherein reference points are contacted by means of a reference motion of the selector lever, **characterized in that** at least one reference motion is carried out by the selector lever along the shift tracks while a gear is engaged.

2. A method according to Claim 1, **characterized in that** the transmission actuation is carried out by moving to a reference point in a selection track, without moving the respective selector forks and gearshift rails.

3. A method according to Claim 2, **characterized in that** the selector lever is moved laterally in the direction of the selection track, and at the same time the reference points upward and downward are contacted periodically.

4. A method according to one of the preceding claims, **characterized in that** a calibration is performed in the direction of selection when the selector arm is moved over the entire width of the selection track.

5. A method according to one of the preceding claims, **characterized in that** a calibration is performed in the direction of a selection track by means of a recess provided parallel to the gearshift rails.

6. A method according to one of the preceding claims, **characterized in that** after the referencing, the selector lever is moved back to its starting position before the reference motion.

7. A method according to one of the preceding claims, **characterized in that** a reference motion to contact the reference points is performed regularly or irregularly.

8. A transmission actuation system for selecting and shifting gears in an automated transmission of a vehicle for carrying out the method according to one of Claims 1 to 7, with a selector lever that operates shift jaws, **characterized in that** at least one reference motion is provided for calibrating and the selection track is designed so that the reference motion is attainable without the current gear being disengaged.

9. A transmission actuating system according to Claim 8, **characterized in that** the shift jaws of the gearshift rails positioned parallel to each other form a shift track in which the selector arm is movable during the reference motion, regardless of whether or not a gear is engaged.

10. A transmission actuating system according to Claim 9, **characterized in that** the provided shift track is provided for calibration in the direction of selection.

11. A transmission actuating system according to one of Claims 8 to 10, **characterized in that** at least one recess is provided for calibration in the direction of selection.

12. A transmission actuating system according to one of Claims 8 to 11, **characterized in that** each gearshift rail has an arresting system, in order to hold the most recently engaged gear in the engaged state.

13. A transmission actuating system according to one of Claims 8 to 12, **characterized in that** at least one brushless electric motor is provided for selecting and/or shifting.

## Revendications

1. Procédé de réglage d'un actionneur de boîte de vitesse d'une boîte automatique d'un véhicule comprenant des voies de changement de vitesse pour un doigt de commande et des mâchoires de commande formant une boîte de vitesse, des points de référence étant mis en marche au moyen d'un trajet de référence du doigt de commande, **caractérisé en ce que** grâce au doigt de commande, au moins une conduite de référence est réalisée le long des voies lorsqu'une vitesse est passée.

2. Procédé selon la revendication 1, **caractérisé en ce que** l'actionneur de boîte de vitesse est réalisé de telle sorte qu'un point de référence est mis en marche dans une voie de changement de vitesse, sans entraîner les fourchettes de boîte de vitesse et les tiges de commande des fourchettes respectives.

3. Procédé selon la revendication 2, **caractérisé en ce que** le doigt de commande est déplacé latéralement en direction de la boîte de vitesse et simultanément les points de référence sont arrêtés périodiquement vers le haut et vers le bas.

4. Procédé selon l'une quelconque des revendications précédentes, **caractérisé en ce qu'**un réglage est réalisé dans la direction de sélection lorsque le doigt de commande est déplacé au-delà de la largeur totale de la boîte de vitesse.

5. Procédé selon l'une quelconque des revendications précédentes, **caractérisé en ce qu'**un réglage est réalisé parallèlement aux tiges de commande des fourchettes en direction d'une boîte de vitesse au moyen d'un évidement prévu.

6. Procédé selon l'une quelconque des revendications précédentes, **caractérisé en ce que** le doigt de commande, après le point de référence, est redéplacé dans sa position de départ avant la conduite de référence.

7. Procédé selon l'une quelconque des revendications précédentes, **caractérisé en ce qu'**une conduite de référence destinée à mettre en marche les points de référence est réalisée régulièrement ou irrégulièrement.

8. Actionneur de boîte de vitesses destiné à sélectionner et à passer des vitesses dans une boîte automatique d'un véhicule pour réaliser le procédé selon l'une quelconque des revendications 1 à 7, comprenant un doigt de commande actionnant des mâchoires de commande, **caractérisé en ce que** pour le réglage, au moins une conduite de référence est prévue et la boîte de vitesses est dimensionnée de telle sorte que la conduite de référence peut être atteinte sans changer la vitesse actuelle.

9. Actionneur de boîte de vitesses selon la revendication 8, **caractérisé en ce que** les mâchoires de commande des tiges de commande des fourchettes disposées parallèlement les unes aux autres forment une voie dans laquelle le doigt de commande peut se déplacer pendant la conduite de référence, qu'une vitesse ait été passée ou non.

10. Actionneur de transmission selon la revendication 9, **caractérisé en ce que** la voie prévue est prévue pour le réglage dans la direction de sélection.

11. Actionneur de transmission selon l'une quelconque des revendications 8 à 10, **caractérisé en ce qu'**au moins un évidement est prévu pour le réglage dans la direction de commande.

12. Actionneur de transmission selon l'une quelconque des revendications 8 à 11, **caractérisé en ce que** chaque tige de commande des fourchettes comprend une détente afin de maintenir la vitesse passée en dernier dans l'état engrené.

13. Actionneur de transmission selon l'une quelconque des revendications 8 à 12, **caractérisé en ce qu'**au moins un électromoteur sans balais est prévu pour la sélection et/ou le passage des vitesses.
